# EUROPÄISCHE PATENTSCHRIFT

(11) **EP 3 044 644 B1**
(45) Veröffentlichungstag und Bekanntmachung des Hinweises auf die Patenterteilung: **19.08.2020**
(21) Anmeldenummer: 14744320.4
(22) Anmeldetag: 25.07.2014
(51) Int. Cl.: G05B 19/418, G05B 19/12

(54) **VERFAHREN ZUR GEFÜHRTEN UMSTELLUNG EINER BEHANDLUNGSMASCHINE**
METHOD FOR THE CONTROLLED CHANGEOVER OF A TREATMENT MACHINE
PROCÉDÉ DE CONVERSION GUIDÉE D'UNE MACHINE DE TRAITEMENT

(30) Priorität: 10.09.2013 DE 102013218020
(43) Veröffentlichungstag der Anmeldung: 20.07.2016
(73) Patentinhaber: Krones AG, 93073 Neutraubling (DE)
(72) Erfinder: SPINDLER, Herbert, 93073 Neutraubling (DE); WERNER, Jürgen, 93073 Neutraubling (DE); KOCH, Peter, 93073 Neutraubling (DE)
(74) Vertreter: Grünecker Patent- und Rechtsanwälte PartG mbB
(86) Internationale Anmeldenummer: PCT/EP2014/066038
(87) Internationale Veröffentlichungsnummer: WO 2015/036158

(56) Entgegenhaltungen:
- DE-A1-102011 054 890
- US-A1- 2009 213 420
- US-A1- 2011 078 979
- US-A1- 2012 075 079

## Beschreibung

### Gebiet der Erfindung

Die Erfindung betrifft ein Verfahren zur geführten Umstellung einer Behandlungsmaschine gemäß Patentanspruch 1.

### Hintergrund der Erfindung

Behandlungsmaschinen, insbesondere Behandlungsmaschinen zur Behandlung von Behältern, beispielsweise Flaschen, Dosen oder ähnlichen Gefäßen, sind häufig modular aufgebaut. Je nach Art der Behälter können sie beispielsweise ein Streckblasmodul (für PET-Flaschen) und/oder ein Füllmodul und/oder ein Etikettiermodul und/oder ein Verpackungsmodul aufweisen. Ein ähnlicher modularer Aufbau ist bei Reinigungsmaschinen zum Reinigen von Behältern wie etwa Flaschen möglich. Jedes Modul führt üblicherweise eine spezielle Behandlung der Behälter aus, wie etwa Streckblasen, Füllen, Etikettieren etc.

Behandlungsmaschinen bzw. deren Module können auf die Behandlung einer speziellen Behälterart eingestellt werden. Wird eine Behälterart gewechselt, erfolgt eine erneute Einstellung der gesamten Behandlungsmaschine oder zumindest einzelner ihrer Module. Dazu können neben Parametern wie Durchlaufgeschwindigkeiten, Rotationsgeschwindigkeiten, Füllhöhen etc. statische Parameter wie Breiten, Längen, Höhen und Winkel eingestellt werden. Beispielsweise können Transportspuren, Führungsgeländer, Zuschnittseinrichtungen, Spreizeinrichtungen so eingestellt werden, dass sie auf die spezifischen Größen und Anforderungen der zu behandelnden Behälter möglichst optimal passen. Häufig wird die Behandlungsmaschine an ausgewählten Verstellpunkten verstellt, d.h. neu eingestellt oder nachjustiert. Die Verstellung an den Verstellpunkten kann mittels Linearmotoren oder Spindelmotoren oder auch manuell geschehen. Für eine bestimmte Behandlung einer bestimmten Behälterart kann es einen bestimmten Satz an Parametern geben. Bei einem Wechsel / einer Umstellung auf einen anderen Behälter wird dann ein anderer Satz an Parametern verwendet. Diese Umstellung kann elektronisch geführt sein. Insbesondere können eine oder mehrere Steuereinheiten verwendet werden, um die Umstellreihenfolge vorzugeben und Soll- und Istwerte für die Verstellpunkte zu überwachen. Die Anzeige der Soll- und Istwerte kann dabei digital gewählt werden.

Neben den erwähnten Parametersätzen oder Parametergarnituren können verschiedene Bedienungselemente und/oder Behandlungselemente und/oder Behandlungsteile für die Behälter zum Einsatz kommen. Diese Bedienungs- oder Behandlungselemente können speziell auf die Behandlungssituation, also die zu behandelnden Behälter angepasst sein. Die Bedienungs- oder Behandlungselemente werden nachfolgend allgemein als Rüstteile oder Formatteile bezeichnet. Eine unvollständige Liste an Beispielen für derartige Elemente sind Einteilerleisten, Füllventile, Etikettengreifer, Einlaufsterne, wobei es viele mehr gibt. Es versteht sich, dass diese Rüstteile / Formatteile häufig zusätzlich zu den bereits oben erwähnten Parametersätzen / Parametergarnituren umgestellt werden. In manchen Fällen bedingen die Parametersätze den Austausch eines Rüstteils. Eine weitere Austauschmöglichkeit eines Formatteils ist ein Austausch im Sinne einer Wartung.

Wenn ein Formatteil einen Verschleiß aufweist, muss es gewartet oder gar ganz ausgetauscht werden. Es kann ebenso zyklisches Austauschen geben. Die Kennzeichnung derartiger Formatteile ist häufig durch Nummern oder Farbcodes ausgeführt. Die Umstellung / das Wechseln / Austauschen der Formatteile / Rüstteil ist nicht an die elektronisch geführte Umstellung der Parameter angekoppelt, es erfolgt praktisch nebenher oder zusätzlich. Die Kennzeichnungsnummern der bei einer Umstellung benötigten Formatteile können zwar auf einer Anzeige angezeigt werden, damit ein korrektes neues Formatteil gewählt wird. Nach dem Einlegen muss jedoch der Vorgang manuell abgeschlossen werden. Das Einlegen / Austauschen / Auswechseln des Formatteils muss beispielsweise manuell quittiert werden, nachdem das Formatteil eingelegt wurden. Danach kann das nächste Formatteil eingelegt / ausgetauscht werden. Dadurch kann es bei der Umstellung zu Fehlern kommen. Insbesondere können falsche Formatteile eingelegt werden. Der Nutzer kann versehentlich trotzdem das Einlegen als "korrekt" quittieren. Die Rüst- und Umstellzeiten, beispielsweise wenn die Behandlungsmaschine zur Behandlung eines neuen, anderen Behälters umgestellt werden soll, verlängern sich durch derartige Fehler, was die Effizienz des Betriebs der Anlage reduzieren kann
Angesichts der oben beschriebenen Probleme ist es Aufgabe der vorliegenden Erfindung, einen integrierten Lösungsansatz bereitzustellen, der die genannten Fehlerquellen minimiert oder gar ausschließt und somit die Effizienz der Anlage erhöhen kann.

### Beschreibung der Erfindung

Diese Aufgabe wird durch ein Verfahren zur geführten Umstellung einer Behandlungsmaschine gemäß Anspruch 1 gelöst.

Es wird ein Verfahren zur geführten Umstellung einer Behandlungsmaschine, insbesondere einer Behälterbehandlungsmaschine beschrieben, die eine Vielzahl von RFID-Lesegeräten, eine Steuerung und ein oder mehrere Behandlungsmodulen umfasst, wobei jedes Behandlungsmodul eine Vielzahl von Fernanzeigen, und ein oder mehrere wechselbare Formatteile, die mit RFID-Transpondern zur eindeutigen Identifikation ausgestattet sind, umfasst, mit den Schritten: Anzeigen von vorgegebenen Soll-Identifikationen, die von der Steuerung übermittelt werden, für die Formatteile mittels der Fernanzeigen; Anzeigen von Ist-Identifikationen, die mittels der RFID-Lesegeräte von den RFID-Transpondern abgerufen werden, für die Formatteile mittels der Fernanzeigen; Vergleichen der jeweiligen Ist-Identifikationen der Formatteile mit den entsprechenden Soll-Identifikationen der Formatteile, und Signalisieren eines notwendigen Wechsels eines Formatteils, falls für dieses Formatteil die Ist-Identifikation von der entsprechenden Soll-Identifikation abweicht, oder Signalisieren eines korrekt eingesetzten Formatteils, falls für dieses Formatteil die Ist-Identifikation mit der entsprechenden Soll-Identifikationen übereinstimmt.

Der modulare Aufbau der Behandlungsmaschine ermöglicht es, die Umstellung oder Umrüstung bei Bedarf pro Modul durchzuführen. Die RFID (Radio-Frequency IDentification)-Transponder bringen den Vorteil, dass die Formatteile in einfacher Weise eindeutig markierbar sind. Dabei müssen die RFID-Transponder nicht am Formatteil mit Energie versorgt werden, sondern können durch ein elektromagnetisches Wechselfeld, das von den RFID-Lesegeräten ausgesendet wird, mit Energie versorgt werden. Es versteht sich, dass die RFID-Lesegeräte in ausreichender Nähe zu den jeweiligen korrespondierenden RFID-Transpondern bereit gestellt werden. Das Markieren der Formatteile bedeutet, dass diese selbst eindeutig identifizierbar sind und darüber hinaus ebenso in ihrem Umfeld eindeutig identifizierbar sind. D.h. das oder die Module, an denen diese spezifischen Formatteile eingesetzt werden, sind ebenfalls eindeutig identifizierbar. Dabei können Soll-Identifikationen angeben, welches spezifische Formatteil wo in einem Modul eingesetzt werden soll. Entsprechend können Ist-Identifikationen angeben, welches Formatteil aktuell in einem Modul eingesetzt ist. Dabei kann jeweils ein Bezug zwischen Formatteil und Modul hergestellt werden, wodurch die Möglichkeit eines fehlerhaften Einlegens eines Formatteils in das Modul minimiert werden kann. Die Soll-Identifikationen können mit den Ist-Identifikationen verglichen werden und ein möglicherweise falsch eingelegtes Formatteil kann gefunden werden und angezeigt werden respektive der Fehler signalisiert werden. Somit kann in einfacher Form angezeigt werden, ob bzw. dass ein Wechsel eines Formatteils notwendig ist. Ebenso kann dem Benutzer angezeigt werden, dass das Formatteil korrekt eingesetzt ist, also dass das richtige Formatteil im richtigen Modul eingesetzt ist.

Die Anzeige kann mittels Fernanzeigen erfolgen. Darunter sollen Anzeigen verstanden werden, die in der Nähe der Formatteile vorgesehen sind, aber nicht notwendigerweise direkt an den Formatteilen vorgesehen sind. Die Anzeige kann digital erfolgen oder auf geeigneten Bildschirmen oder Touchscreens erfolgen.

In dem Verfahren können die Soll-Identifikationen und die Ist-Identifikationen der Formatteile jeweils eine Formatteilnummer und eine Behandlungsmodulnummer umfassen, so dass ein Formatteil einem Behandlungsmodul zugeordnet werden kann.

Hierdurch kann die spezifische Zuordnung zwischen einem Formatteil und einem Modul hergestellt werden.

Die Soll-Identifikationen können ferner für ein Formatteil einen Soll-Zeitraum umfassen, der angibt, wie lange ein Formatteil in einem Behandlungsmodul eingesetzt werden soll, und die Ist-Identifikationen können für ein Formatteil einen Ist-Zeitraum umfassen, der angibt, wie lange ein Formatteil bereits in einem Behandlungsmodul eingesetzt ist.

Hierdurch kann ein zeitlich gesteuerter Austausch bereitgestellt werden. Beispielsweise können in einem Modul einer Behandlungsmaschine Formatteile gemäß einem Wartungsplan nach einer vorbestimmten Zeit oder einer vorbestimmten Betriebszeit ausgetauscht werden.

In dem Verfahren kann das Signalisieren eines notwendigen Wechsels eines Formatteils erfolgen, falls für ein Formatteil der Ist-Zeitraum größer ist als der Soll-Zeitraum.

Es versteht sich, dass dabei auch Toleranzen betrachtet werden können, beispielsweise ob ein Soll-Zeitraum bezüglich Zeitdauer oder Betriebsdauer um mehr als eine vorgegebene Toleranz überschritten wurde.

Die Behandlungsmodule können ferner eine Vielzahl von Umstellpunkten aufweisen, dabei kann das Verfahren ferner umfassen: Anzeigen mittels der Fernanzeigen von benötigten Umstellungen an den Umstellpunkten in Breite und/oder Höhe und/oder Winkel, und von erfolgreichen Umstellungen an den Umstellpunkten.

Das Umstellen oder Verstellen von Umstellpunkten kann ebenfalls bei einer Umstellung einer Behandlungsmaschine vorgenommen werden. Beispielsweise können Breiten und/oder Höhen und/oder Winkel umgestellt werden. Die nötigen aktuellen Werte für die Umstellung, beispielsweise in absoluten Einheiten oder relativen Einheiten, können ebenfalls mittels der Fernanzeigen angezeigt werden. Damit können sowohl die Umstellung / Verstellung an den Umstellpunkten der Behandlungsmaschine respektive ihrer Module als auch die Umstellung / Umrüstung von Formatteilen der Behandlungsmaschine respektive ihrer Module im Verbund mittels der Fernanzeigen angezeigt werden, wodurch sich ein kohärentes Anzeige- und Überprüfungskonzept ergibt.

In dem Verfahren können die RFID-Lesegeräte mit den Fernanzeigen über eine digitale, differentielle Schnittstelle kommunizieren.

Dabei kann die digitale, differentielle Schnittstelle eine RS-485-Schnittstelle oder eine CANopen-Schnittstelle umfassen.

Damit können gängige Schnittstellendefinitionen für die Kommunikation verwendet werden. Hierdurch sind bereits handelsüblich verfügbare Fernanzeigen im Rahmen des Verfahrens verwendbar.

Das Verfahren kann ferner Übermitteln der Soll-Identifikationen für die Formatteile von der Steuerung an die RFID-Lesegeräte umfassen.

Das Verfahren kann ferner Übermitteln der von der Steuerung übermittelten Soll-Identifikationen von den RFID-Lesegeräten an die Fernanzeigen umfassen.

Das Verfahren kann ferner Übermitteln der von den RFID-Transpondern abgerufenen Ist-Identifikationen für die Formatteile von den RFID-Lesegeräten an die Fernanzeigen umfassen.

Hiermit kann die Steuerung das Anzeigen der Soll-Identifikationen ebenso wie das Anzeigen der Ist-Identifikationen mittels der Fernanzeigen steuern. Dabei findet die Kommunikation über die RFID-Lesegeräte statt. Es ist ebenso möglich, dass die Fernanzeigen die Soll-Identifikationen und die Ist-Identifikationen gleichzeitig anzeigen, beispielsweise digital, und dass eine Differenz oder Abweichung mittels der Fernanzeigen angezeigt wird. Dabei kann auch die Richtung der Abweichung bezüglich des jeweiligen Wertes der Soll-Identifikation, beispielsweise nach oben oder nach unten, angezeigt werden.

In dem Verfahren kann das Signalisieren eines notwendigen Wechsels eines Formatteils ein erstes optisches Signal umfassen, und das Signalisieren eines korrekt eingesetzten Formatteils ein zweites optisches Signal umfassen, das von dem ersten optischen Signal verschieden ist.

Das optische Signal kann beispielsweise ein rotes Licht, etwa eine rot leuchtende LED, umfassen, um einen Wechsel anzuzeigen, ebenso kann beispielsweise ein grünes Licht ein korrekt eingesetztes Formatteil anzeigen. Ebenso können Umstellungen an den Umstellpunkten auf diese Weise angezeigt werden.

Das Verfahren kann ferner den Schritt Anzeigen mittels der Fernanzeigen einer Reihenfolge der zu wechselnden Formatteile und/oder der umzustellenden Umstellpunkte, dabei Überwachen der korrekten Reihenfolge durch die Steuerung umfassen.

Hierdurch kann ein Nutzer der Behandlungsmaschine durch die Umstellung der Maschine geführt werden und in einer korrekten Reihenfolge Formatteile austauschen und/oder Umstellpunkte umstellen. Hierdurch werden können eventuelle Fehlumstellungen weitestgehend vermieden werden.

Es können zumindest einige der Fernanzeigen mobil sein oder mit zusätzlichen mobilen Anzeigen kombinierbar sein.

Hierdurch wird eine noch größere Flexibilität für den Benutzer bereitgestellt, insbesondere bei schwer zugänglichen Formatteilen - oder auch wenn mehr als ein Benutzer an einer Umstellung beteiligt sein sollen.

Im Folgenden werden Ausführungsformen der Erfindung unter Bezugnahme auf die Figuren beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

Es zeigen:
- Figur 1:: Schematische Ansicht eines Moduls einer Behandlungsmaschine.
- Figur 2:: Schematische Ansicht einer Behandlungsmaschine mit einem Modul und Formatteilen.
- Figur 3:: Schematische Ansicht eines Verfahrens zur geführten Umstellung einer Behandlungsmaschine.

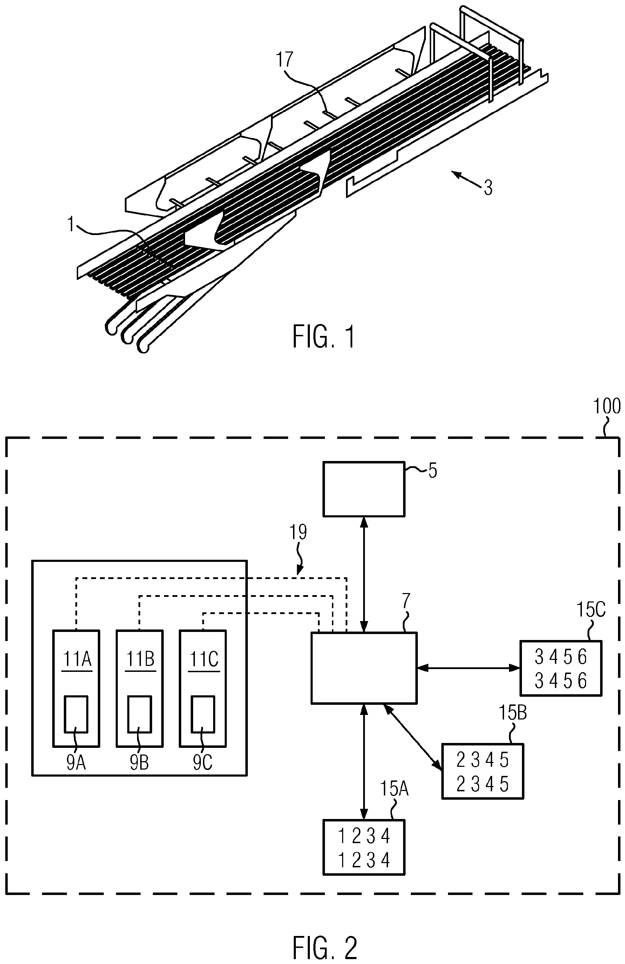

Die Figur 1 zeigt eine schematische Ansicht eines Moduls in einer Behandlungsmaschine. In diesem Beispiel ist ein Ausschnitt aus einer Serienmaschine gezeigt. Rein beispielhaft ist ein Formatteil 1 in Form einer Einteilerleiste gezeigt. Ein Produktstrom kann mittels Einteilerleisten mit mehreren daran angeordneten Einteilerfingern (nicht gezeigt) gruppiert werden. Sollen die Module an unterschiedliche Produkte und/oder Artikelgrößen angepasst werden, so kann es notwendig werden, die Einteilerleisten austauschen zu müssen, um spezifischen Gruppierungsanforderungen Rechnung zu tragen. Somit kann es notwendig sein, ein oder mehrere Einteilerleisten gegen andersformatige Einteilerleisten, beispielsweise wenige dickere Einteilerleisten auszutauschen. Es erfolgt in diesem Falle ein Formatteilwechsel. Es versteht sich, dass üblicherweise weitere Formatteile in einem Modul vorhanden sein können und dass für das gezeigte Beispiel lediglich aus Gründen der Übersichtlichkeit nur ein einziges Formatteil gezeigt ist.

Ebenso kann es in dem in Figur 1 gezeigten Beispiel erforderlich sein, eine Verstellung von Führungsteilen vorzunehmen. Figur 1 zeigt rein beispielhaft einen Umstellpunkt 17. Am Umstellpunkt 17 kann in diesem Beispiel ein Führungsgeländer verstellt werden, so dass eine Breitenanpassung für den Produktstrom vorgenommen werden. Kann. Es versteht sich, dass üblicherweise weitere Umstellpunkte in einem Modul vorhanden sein können und dass für das gezeigte Beispiel lediglich aus Gründen der Übersichtlichkeit nur ein Umstellpunkt 17 gezeigt ist.

Die Figur 2 zeigt eine schematische Ansicht einer Behandlungsmaschine 100, beispielsweise zur Behandlung von Behältern wie etwa Flaschen. Die Behandlungsmaschine 100 umfasst ein Behandlungsmodul 13. Es versteht sich, dass die Anzahl der Behandlungsmodule in einer Behandlungsmaschine unterschiedlich sein kann und dass rein beispielhaft nur ein Behandlungsmodul 13 gezeigt ist.

Das Behandlungsmodul 13 in Figur 2 umfasst rein beispielhaft drei Formatteile 11A, 11B und 11C. Die Formatteile 11A, 11 B und 11C können auswechselbar sein. Die Formatteile 11A, 11B und 11C sind jeweils mit RFID-Transpondern 9A, 9B und 9C versehen. Die RFID-Transponder 9A, 9B und 9C sind beispielsweise unmittelbar am oder auf den jeweiligen Formatteilen 11A, 11 B und 11C angebracht. Beispielsweise hat jedes Formatteil 11A, 11B und 11C somit wenigstens einen RFID-Transponder 9A, 9B, und 9C. Es können auch weitere RFID-Transponder an bestimmten, vorgegebenen Stellen im Modul 13 vorgesehen sein. Damit können noch eine zusätzliche Möglichkeit, also eine höhere Sicherheit bereitgestellt werden, dass das richtige Formatteil im richtigen Modul eingelegt wird.

In Figur 2 ist ferner ein RFID-Lesegerät (RFID-Reader) 7 gezeigt. Es versteht sich, dass mehrere RFID-Lesegeräte 7 vorhanden sein können, die beispielsweise Gruppen von RFID-Transpondern 9A, 9B, 9C zugeordnet sein können. Die RFID-Lesegeräte 7 können ein elektromagnetisches Wechselfeld 19 aussenden, das in Figur 2 durch gestrichelte Linien angedeutet ist. Hierdurch können mittels der RFID-Lesegeräte 7 die RFID-Transponder 9A, 9B und 9C der Formatteile 11A, 11B, 11C abgefragt werden. Die RFID-Transponder 9A, 9B und 9C brauchen nicht extra mit Energie versorgt werden, sondern können durch das Wechselfeld 19, das von dem wenigstens einen RFID-Lesegerät 7 ausgesendet wird, mit Energie versorgt werden. Das RFID-Lesegerät 7 kann somit die RFID-Transponder 9A, 9B und 9C abfragen und mit ihnen kommunizieren.

Figur 2 zeigt eine Steuereinheit / Steuerung 5. Dabei kann es sich um einen Computer handeln, mit daran angeschlossenen Speichermedien (nicht gezeigt). Die Steuereinheit 5 kann ferner in einem Netzwerk (nicht gezeigt) vernetzt sein, um eine Fernsteuerung der Behandlungsmaschine 100 oder der Umstellung der Behandlungsmaschine 100 zu steuern, zu kontrollieren oder zu überwachen. Die Steuerung 5 kann mit den RFID-Lesegeräten 7 kommunizieren, wie dies durch einen Pfeil angedeutet ist.

Die RFID-Lesegeräte 7 können mit Fernanzeigen 15A, 15B und 15C kommunizieren, wie dies in Figur 2 angedeutet ist. Dabei kann jede Fernanzeige 15A, 15B und 15C einem Formatteil 11A, 11B, 11 C zugeordnet sein respektive einem RFID-Transponder 9A, 9B, 9C, der an einem Formatteil 11A, 11B, 11C vorgesehen sein kann. Ein Beispiel für eine mögliche Fernanzeige 15A, 15B, 15C ist die Fernanzeige AP24 der SIKO GmbH.

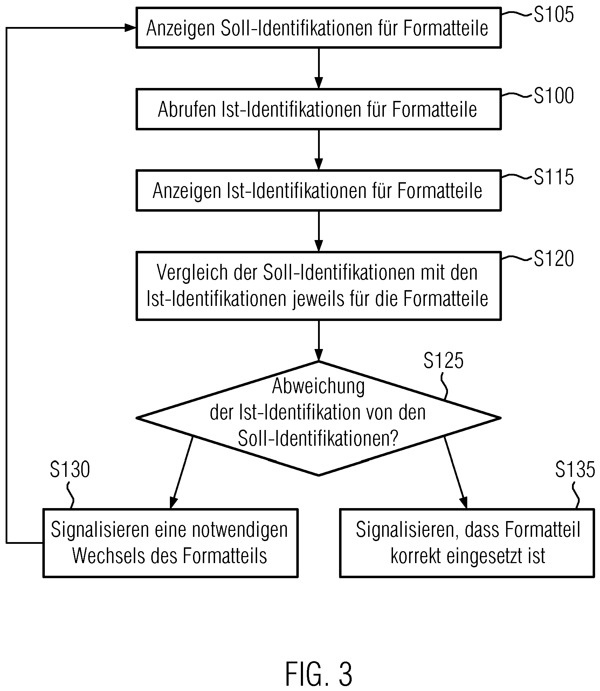

In Figur 2 zeigen die Fernanzeigen 15A, 15B, und 15C rein beispielhaft digitale Nummern zum Identifizieren von Formatteilen 11A, 11B, 11C. Diese Identifizierung wird im Zusammenhang mit Figur 3 dargestellt. Die Anzeige oder das Display der Fernanzeigen 15A, 15B und 15C kann aber ebenso anders gestaltet sein als in Figur 2 beispielhaft gezeigt.

Insbesondere können in Figur 2 die RFID-Lesegeräte 7 mit der Steuerung 5 kommunizieren. Die Steuerung 5 kann die RFID-Lesegeräte 7 ansteuern, mit den RFID-Transpondern 9A, 9B und 9C zu kommunizieren. Ein möglicher Ablauf in Figur 3 dargestellt.

Die Figur 3 bezieht sich auf eine geführte Umstellung einer Behandlungsmaschine, wie sie beispielsweise in Figur 2 gezeigt ist. Die geführte Umstellung kann das Umstellen von Umstellpunkten umfassen, siehe beispielsweise den Umstellpunkt 17 in Figur 1. Die geführte Umstellung kann ebenso zusätzlich oder alternativ die Umstellung von Formatteilen umfassen, insbesondere deren kontrollierter Austausch. Es kann somit der gleiche Ansatz für Umstellpunkte und Formatteile bereit gestellt werden.

In Figur 3 in Schritt S105 werden mittels der Fernanzeigen 15A, 15B und 15C Soll-Identifikationen für die Formatteile 11A, 11 B und 11C angezeigt. Die Soll-Identifikationen können von der Steuerung 5 an die ein oder mehreren RFID-Lesegeräte 7 übermittelt werden. Der Übermittlungsvorgang kann von der Steuerung 5 gesteuert und insbesondere begonnen werden. Es ist ebenso möglich, dass die RFID-Lesegeräte 7 einige oder alle Soll-Identifikationen von der Steuerung 5 abfordern. Von den RFID-Lesegeräten 7 können die Soll-Identifikationen an die Fernanzeigen 15A, 15B und 15C übermittelt werden und dort angezeigt werden, wie es schematisch in Figur 2 angedeutet ist. Es ist ebenso möglich, dass die Steuerung zusätzlich auch direkt mit den Fernanzeigen 15A, 15B und 15C kommuniziert.

Die Soll-Identifikationen identifizieren die Formatteil 11A, 11B, 11C in ihrer Umgebung. Hierdurch kann jeweils das Formatteil 11A, 11B und 11C eindeutig festgelegt werden. Mit anderen Worten kann das Formatteil somit codiert werden. Zusätzlich können die Soll-Identifikationen beispielsweise anzeigen, wie sich das Formatteil zu seiner Umgebung verhält, in der es eingesetzt wird, hier also das Behandlungsmodul 13. Die Soll-Identifikationen können ferner anzeigen, wie lange ein Formatteil eingesetzt werden soll.

Den Soll-Identifikationen können den Ist-Identifikationen gegenüber gestellt werden. In Figur 3 in Schritt S110 werden die Ist-Identifikationen mittels der RFID-Lesegeräte 7 von den RFID-Transpondern 9A, 9B und 9C abgerufen. Mittels des Wechselfeldes 19 können die Ist-Identifikationen von den RFID-Transpondern 9A, 9B und 9C an die RFID-Lesegeräte 7 übermittelt werden. Die RFID-Lesegeräte 7 können jeweils die entsprechenden, empfangenen Ist-Identifikationen an die Fernanzeigen 15A, 15B und 15C übermitteln. Dort können die Ist-Identifikationen angezeigt werden. Insbesondere kann dort bereits optisch durch einen Benutzer ein Vergleich der Soll-Identifikationen und der Ist-Identifikationen durchgeführt werden, insbesondere dann, wenn beide im Wesentlichen gleichzeitig angezeigt werden. Zusätzlich können die RFID-Lesegeräte 7 die Ist-Identifikationen an die Steuerung 5 übermitteln. Dort kann gemäß Schritt S120 in Figur 3 automatisch ein Vergleich erfolgen. Die Steuerung 5 kann insbesondere eine Diskrepanz zwischen den Soll-Identifikationen und den Ist-Identifikationen gemäß Schritt S125 bewerten. In Abhängigkeit von der Bewertung können die Schritte S130 oder S135 eingeleitet werden. Falls die Soll-Identifikationen von den Ist-Identifikationen abweichen, Schritt S130, kann ein Handlungsbedarf signalisiert werden. Insbesondere kann signalisiert werden, dass ein Fehler bezügliche eines Formatteils vorliegt, beispielsweise ist ein falsches Formatteil eingesetzt oder das Formatteil 11A, 11B 11C ist bereits für eine zu lange Zeitdauer eingesetzt. Ebenso kann angezeigt werden, dass das Formatteil 11A, 11B, 11C korrekt eingesetzt ist. Das Ergebnis des Vergleichs kann wiederum von der Steuerung 5 über das oder die RFID-Lesegeräte 7 an die Fernanzeigen 15A, 15B und 15C übermittelt werden. Somit kann eine Umstellung der Behandlungsmaschine automatisch geführt werden. Jeder umzustellende Umstellpunkt und jedes auszutauschende Formatteil können mit dem gleichen Anzeigekonzept angezeigt werden. Eine Sequenz des Anzeigens ist möglich, so dass der Nutzer praktisch kaum noch Fehler bei der Reihenfolge der Umstellung machen kann. Das Signalisieren in Schritt S130 kann beispielsweise durch eine rote LED oder ein rotes Licht erfolgen. Zusätzlich können die anzeigten Werte, beispielsweise digitale Zahlen, blinken oder unterlegt werden, so dass ein Handlungsbedarf deutlich sichtbar wird. Ebenso kann das Signalisieren in Schritt S135 durch eine grüne LED oder ein grünes Licht erfolgen, so dass eine Bestätigung sichtbar ist, dass an dieser Stelle für diese Formatteil kein Handlungsbedarf besteht oder aber eine Handlung, insbesondere ein Austausch, erfolgreich abgeschlossen worden ist.

Die Kommunikation der Fernanzeigen 15A, 15B, 15C mit den RFID-Lesegeräten 7 und/oder der Steuerung kann über geeignete digitale Schnittstellen erfolgen. Damit lassen sich bereits bestehende Anzeigen einfach in das Konzept integrieren. Beispielsweise können RS485- oder CANopen-Schnittstellen verwendet werden.

Es ist ebenso möglich, zumindest für einige der Fernanzeigen 15A, 15B und 15C zusätzlich mobile Anzeigen mit den Fernanzeigen 15A, 15B und 15C zu kombinieren. Es ist ebenso möglich, dass einige oder alle der Fernanzeigen 15A, 15B, 15C mobil sind. Für den Benutzer ergibt sich hierdurch eine größere Flexibilität insbesondere bei schwer zugänglichen Formatteilen und/oder Umstellpunkten.

Zusammenfassend werden durch die durchgängig geführte Umstellung und/oder Vorgabe von Wechselzyklen für die Formatteile und/oder die Umstellpunkte eine große Sicherheit vor Falscheinstellungen, Falschumstellungen, falschem Austausch bereitgestellt, wodurch Zeitverlust verringert und Effizienz erhöht werden können.

## Patentansprüche

1. Verfahren zur geführten Umstellung einer Behandlungsmaschine (100), insbesondere einer Behälterbehandlungsmaschine, die eine Vielzahl von RFID-Lesegeräte (7), eine Steuerung (5) und ein oder mehrere Behandlungsmodulen (3, 13) umfasst, wobei jedes Behandlungsmodul (3, 13) eine Vielzahl von Fernanzeigen (15A, 15B, 15C), und ein oder mehrere wechselbare Formatteile (1, 11A, 11B, 11C), die mit RFID-Transpondern (9A, 9B, 9C) zur eindeutigen Identifikation ausgestattet sind, umfasst, mit den Schritten:
Anzeigen (S105) von vorgegebenen Soll-Identifikationen, die von der Steuerung (5) übermittelt werden, für die Formatteile (1, 11A, 11B, 11C) mittels der Fernanzeigen (15A, 15B, 15C);
Anzeigen (S115) von Ist-Identifikationen, die mittels der RFID-Lesegeräte (7) von den RFID-Transpondern (9A, 9B, 9C) abgerufen werden, für die Formatteile (1, 11A, 11B, 11C) mittels der Fernanzeigen (15A, 15B, 15C);
Vergleichen (S120) der jeweiligen Ist-Identifikationen der Formatteile (1, 11A, 11B, 11C) mit den entsprechenden Soll-Identifikationen der Formatteile (1, 11A, 11B, 11C), und
Signalisieren (S130) eines notwendigen Wechsels eines Formatteils (1, 11A, 11B, 11C), falls für dieses Formatteil (1, 11A, 11B, 11C) die Ist-Identifikation von der entsprechenden Soll-Identifikation abweicht (S125), oder
Signalisieren (S135) eines korrekt eingesetzten Formatteils (1, 11A, 11B, 11C), falls für dieses Formatteil die Ist-Identifikation mit der entsprechenden Soll-Identifikation übereinstimmt (S125);
wobei zumindest einige der Fernanzeigen (15A, 15B, 15C) mit zusätzlichen mobilen Anzeigen kombiniert sind.

2. Verfahren gemäß Anspruch 1, wobei die Soll-Identifikationen und die Ist-Identifikationen der Formatteile (1, 11A, 11B, 11C) jeweils eine Formatteilnummer und eine Behandlungsmodulnummer umfassen, so dass ein Formatteil (1, 11A, 11B, 11C) einem Behandlungsmodul (3, 13) zugeordnet werden kann.

3. Verfahren gemäß Anspruch 1 oder 2, wobei die Soll-Identifikationen ferner für ein Formatteil einen Soll-Zeitraum umfassen, der angibt, wie lange ein Formatteil (1, 11A, 11B, 11C) in einem Behandlungsmodul (3, 13) eingesetzt werden soll, und die Ist-Identifikationen für ein Formatteil (1, 11A, 11B, 11C) einen Ist-Zeitraum umfassen, der angibt, wie lange ein Formatteil (1, 11A, 11B, 11C) bereits in einem Behandlungsmodul (3, 13) eingesetzt ist.

4. Verfahren gemäß Anspruch 3, wobei Signalisieren eines notwendigen Wechsels eines Formatteils (1, 11A, 11B, 11C) erfolgt, falls für ein Formatteil (1, 11A, 11B, 11C) der Ist-Zeitraum größer ist als der Soll-Zeitraum.

5. Verfahren gemäß wenigstens einem der Ansprüche 1 - 4, wobei die Behandlungsmodule (3, 13) ferner eine Vielzahl von Umstellpunkten (17) aufweisen, ferner mit dem Schritt: Anzeigen mittels der Fernanzeigen (15A, 15B, 15C) von benötigten Umstellungen an den Umstellpunkten (17) in Breite und/oder Höhe und/oder Winkel, und von erfolgreichen Umstellungen an den Umstellpunkten (17).

6. Verfahren gemäß wenigstens einem der Ansprüche 1 - 5, wobei die RFI D-Lesegeräte (7) mit den Fernanzeigen (15A, 15B, 15C) Daten über eine digitale, differentielle Schnittstelle austauschen.

7. Verfahren gemäß Anspruch 6, wobei die digitale, differentielle Schnittstelle eine RS-485-Schnittstelle oder eine CANopen-Schnittstelle umfasst.

8. Verfahren gemäß wenigstens einem der Ansprüche 1 - 7, ferner mit Übermitteln der Soll-Identifikationen für die Formatteile (1, 11A, 11B, 11C) von der Steuerung (5) an die RFID-Lesegeräte (7).

9. Verfahren gemäß wenigstens einem der Ansprüche 1 - 8, ferner mit Übermitteln der von der Steuerung (5) übermittelten Soll-Identifikationen von den RFID-Lesegeräte (7) an die Fernanzeigen (15A, 15B, 15C) übermittelt werden.

10. Verfahren gemäß wenigstens einem der Ansprüche 1 - 9, ferner mit Übermitteln der von den RFID-Transpondern (9A, 9B, 9C) abgerufenen Ist-Identifikationen für die Formatteile (1, 11A, 11B, 11C) von den RFID-Lesegeräte (7) an die Fernanzeigen (15A, 15B, 15C).

11. Verfahren gemäß wenigstens einem der Ansprüche 1-10,
wobei das Signalisieren eines notwendigen Wechsels eines Formatteils (1, 11A, 11B, 11C) ein erstes optisches Signal umfasst, und
wobei das Signalisieren eines korrekt eingesetzten Formatteils (1, 11A, 11B, 11C) ein zweites optisches Signal umfasst, das von dem ersten optischen Signal verschieden ist.

12. Verfahren gemäß Anspruch 11, ferner mit dem Schritt Anzeigen mittels der Fernanzeigen (15A, 15B, 15C) einer Reihenfolge der zu wechselnden Formatteile (1, 11A, 11B, 11C) und/oder der umzustellenden Umstellpunkte (17), dabei Überwachen der korrekten Reihenfolge durch die Steuerung (5).

## Claims

1. A method for the controlled changeover of a treatment machine, having a plurality of RFID reading devices, a control unit and one or more treatment modules, each treatment module having a plurality of remote indicators and one or more exchangeable handling parts which are provided with RFID-transponders for unambiguous identification, comprising:
displaying predetermined target identifiers transmitted by the control unit for the handling parts by means of remote indicators;
displaying actual identifiers retrieved from the RFID transponders by means of the RFID reading devices for the handling parts by means of the remote indicators;
comparing the respective actual identifiers of the handling parts with the corresponding target identifiers of the handling parts and
signaling when a change of a handling part is required if for said handling part the actual identifier deviates from the corresponding target identifier, or
signaling a correctly used handling part if for said handling part the actual identifier matches with the corresponding target identifiers;
wherein at least some of the remote indicators are combined with additional mobile displays.

2. The method according to claim 1, wherein the target identifiers and the actual identifiers of the handling parts each comprise a handling part number and a treatment module number so that a handling part can be assigned to a treatment module.

3. The method according to claim 1, wherein the target identifiers for a handling part further comprise a target period for a handling part indicating how long a handling part is to be used in a treatment module, and the actual identifiers for a handling part comprise an actual period indicating how long a handling part has already been used in a treatment module.

4. The method according to claim 3, wherein signaling a required exchange of a handling part occurs in case the actual period for a handling part is greater than the target period.

5. The method according to claim 1, wherein the treatment modules further comprise a plurality of changeover points (17), further comprising the step of: displaying, by means of remote indicators, the required changeovers at the changeover points in width and/or height and/or angle, and successful changeovers at the changeover points.

6. The method according claim 1, wherein the RFID reading devices exchange data with the remote indicators via a digital differential interface.

7. The method according to claim 6, wherein the digital differential interface comprises an RS-485 interface or a CAN open interface.

8. The method according to claim 1, further comprising transmitting the target identifiers for the handling parts by means of the control unit to the RFID reading devices.

9. The method according to claim 1, further comprising transmitting the target identifiers transmitted by the control unit from the RFID reading devices to the remote indicators.

10. The method according to claim 1, further comprising transmitting the actual identifiers for the handling parts retrieved by the RFID transponders from the RFID reading devices to the remote indicators.

11. The method according to claim 1, wherein
signaling a necessary exchange of a handling part includes a first optical signal, and
signaling a correctly used handling part includes a second optical signal which is different from the first optical signal.

12. The method according to claim 11, further comprising displaying, by means of remote indicators, an order of handling parts to be exchanged and/or the changeover points to be changed while monitoring the correct sequence by means of the control unit.

## Revendications

1. Procédé de conversion guidée d'une machine de traitement (100), en particulier d'une machine de traitement de conteneurs, qui comprend une pluralité de lecteurs RFID (7), un dispositif de commande (5) et un ou plusieurs modules de traitement (3, 13), dans lequel chaque module de traitement (3, 13) comprend une pluralité d'affichages à distance (15A, 15B, 15C), et une ou plusieurs parties de format interchangeables (1, 11A, 11B, 11C) équipées de transpondeurs RFID (9A, 9B, 9C) pour une identification unique, comprenant les étapes suivantes:
l'affichage (S105) d'identifications de cibles prédéterminées, qui sont transmises par le dispositif de commande (5), pour les parties de format (1, 11A, 11B, 11C) au moyen des affichages à distance (15A, 15B, 15C);
l'affichage (S115) des identifications réelles, qui sont appelées au moyen des lecteurs RFID (7) à partir des transpondeurs RFID (9A, 9B, 9C), pour les parties de format (1, 11A, 11B, 11C) au moyen des affichages à distance (15A, 15B, 15C);
la comparaison (S120) des identifications réelles respectives des parties de format (1, 11A, 11B, 11C) avec les identifications nominales correspondantes des parties de format (1, 11A 11 B, 11C) et
la signalisation (S130) d'un changement nécessaire d'une partie de format (1, 11A, 11B, 11C), si l'identification réelle de cette partie de format (1, 11A, 11B, 11C) diffère de l'identification nominale correspondante (S125), ou
la signalisation (S135) d'une partie de format correctement insérée (1, 11A, 11B, 11C), si l'identification réelle de cette partie de format correspond à l'identification nominale correspondante (S125);
dans lequel au moins certains des affichages à distance (15A, 15B, 15C) sont combinés avec des affichages mobiles supplémentaires.

2. Procédé selon la revendication 1, dans lequel les identifications cibles et les identifications réelles des parties de format (1, 11A, 11B, 11C) comprennent chacune un numéro de partie de format et un numéro de module de traitement, de sorte qu'une partie de format (1, 11A, 11 B, 11C) peut être attribuée à un module de traitement (3, 13).

3. Procédé selon les revendications 1 ou 2, dans lequel les identifications cibles comprennent en outre, pour une partie de format, une période de temps cible qui indique combien de temps une partie de format (1, 11A, 11B, 11C) doit être utilisée dans un module de traitement (3, 13), et les identifications réelles pour une partie de format comprennent un numéro de partie de format et un numéro de module de traitement, de sorte qu'une partie de format (1, 11A, 11B, 11C) peut être attribuée à un module de traitement (3, 13).

4. Procédé selon la revendication 3, dans lequel la signalisation d'un changement nécessaire d'une partie de format (1, 11A, 11B, 11C) a lieu si la période réelle est plus longue que la période cible pour une partie de format (1, 11A, 11B, 11C).

5. Procédé selon au moins une des revendications 1 à 4, dans lequel les modules de manipulation (3, 13) comprennent en outre une pluralité de points de changement (17), comprenant en outre l'étape consistant à : indiquer au moyen des affichages à distance (15A, 15B, 15C) les changements requis aux points de changement (17) en largeur et/ou en hauteur et/ou en angle, et les changements réussis aux points de changement (17).

6. Procédé selon au moins une des revendications 1 à 5, dans lequel les lecteurs RFID (7) échangent des données avec les affichages à distance (15A, 15B, 15C) via une interface numérique différentielle.

7. Procédé selon la revendication 6, dans lequel l'interface numérique différentielle comprend une interface RS-485 ou une interface CANopen.

8. Procédé selon au moins l'une des revendications 1 à 7, comprenant en outre la transmission des identifications souhaitées pour les parties de format (1, 11A, 11B, 11C) du dispositif de commande (5) aux lecteurs RFID (7).

9. Procédé selon au moins l'une des revendications 1 à 8, avec en outre la transmission des identifications souhaitées pour les parties de format (1, 11A, 11B, 11C) transmises par la commande (5) des lecteurs RFID (7) aux affichages à distance (15A, 15B, 15C).

10. Procédé selon au moins l'une des revendications 1 à 9, avec en outre la transmission des identifications réelles des parties de format (1, 11A, 11B, 11C) récupérées des transpondeurs RFID (9A, 9B, 9C) des lecteurs RFID (7) aux affichages à distance (15A, 15B, 15C).

11. Procédé selon au moins une des revendications 1 à 10,
dans lequel la signalisation d'un changement nécessaire d'une partie de format (1, 11A, 11B, 11C) comprend un premier signal optique, et
dans lequel la signalisation d'une partie de format correctement insérée (1, 11A, 11B, 11C) comprend un deuxième signal optique différent du premier signal optique.

12. Procédé selon la revendication 11, comprenant en outre l'étape consistant à afficher au moyen des affichages à distance (15A, 15B, 15C) un ordre des parties de format (1, 11A, 11B, 11C) à changer et/ou des points de changement (17) à changer, contrôlant ainsi l'ordre correct par le dispositif de commande (5).
